# EUROPEAN PATENT APPLICATION

(11) **EP 4 434 511 A1**
(43) Date of publication of application: **25.09.2024**
(21) Application number: 23163097.1
(22) Date of filing: 21.03.2023
(51) Int. Cl.: A61J 1/10, B29C 49/00, B32B 27/00, B65D 75/00

(54) **BAG COMPONENT FOR A PRODUCT, METHOD FOR MANUFACTURING A BAG COMPONENT, AND FORMING TOOL**

(71) Applicant: B. Braun Melsungen AG, 34212 Melsungen (DE)
(72) Inventor: LOEWENSBERG, Denis, 34212 Melsungen (DE)
(74) Representative: Maiwald GmbH

(57) **Abstract**

A bag component (10) for a product is described. The bag component (10) comprises a first plastic film (12) and a second plastic film (14), the first plastic film (12) and the second plastic film (14) being placed on top of each other. A product space (16) is delimited by the mutually opposite sides of the first plastic film (12) and the second plastic film (14) and a circumferentially closed boundary (18). The first plastic film (12) and the second plastic film (14) are joint to each other along a first portion (20) of the boundary (18). Moreover, the first plastic film (12) and the second plastic film (14) form a reception space (24, 24a, 24b) for the product and/or an insert component (26, 26a, 26b) along a second portion (22, 22a, 22b) of the boundary (18). At least one of the first plastic film (12) and the second plastic film (14) comprises at least one recess (28) in or adjacent to the second portion (22, 22a, 22b) of the boundary (18). Furthermore, a method for manufacturing a bag component (10) is shown. Additionally, a forming tool for forming at least one recess (28) in at least one plastic film (12, 14) of a plastic film arrangement comprising a first plastic film (12) and a second plastic film (14) is presented.

## Description

The present invention relates to a bag component for a product. The bag component comprises a first plastic film and a second plastic film. The first plastic film and the second plastic film are placed on top of each other. A product space is delimited by the mutually opposite sides of the first plastic film and the second plastic film and a circumferentially closed boundary. The first plastic film and the second plastic film are joint to each other along a first portion of the boundary. Moreover, the first plastic film and the second plastic film form a reception space for the product and/or an insert component along a second portion of the boundary.

The present invention additionally is directed to a method for manufacturing a bag component for a product.

Furthermore, the present invention relates to a forming tool for forming at least one recess in at least one plastic film.

Such bag components may be used in a medicinal context. The bag components may be directly used as a bag or may undergo further manufacturing steps in order to produce a bag. In this context, the bag may be an infusion bag, e.g. for irrigation of for dispensing a medicine, an enteral nutrition bag or a parenteral nutrition bag. Accordingly, the bag component may be an infusion bag component, an irrigation bag component, an enteral nutrition bag component or a parenteral nutrition bag component. Alternatively, such bag components or bags may be used in a non-medicinal context. In this context, the bag component or bag may be used as a packaging for liquid or pulpy food items. In this field of application, the bag may be formed as a stand-up pouch.

Independent from the field of application, an insert component and/or a product may be placed in the reception space or transferred through the reception space during the production of the bag. In industrial production environments, the insertion of the insert component and/or the product often is challenging since the insert component and/or the product needs to be moved in a precise manner relative to the first plastic film and to the second plastic film of the bag component such that the first plastic film and the second plastic film are forced apart from one another by the insert component and/or the product. This applies to the second portion of the boundary.

It is an objective of the present invention to generally improve the manufacturing of bag components of the type as mentioned above. Specifically, the introduction of an insert component and/or a product into the reception space of the bag component shall be facilitated.

According to a first aspect of the invention, there is provided a bag component for a product. The bag component comprises a first plastic film and a second plastic film. The first plastic film and the second plastic film are placed on top of each other. A product space is delimited by the mutually opposite sides of the first plastic film and the second plastic film and a circumferentially closed boundary. The first plastic film and the second plastic film are joint to each other along a first portion of the boundary. Moreover, the first plastic film and the second plastic film form a reception space for the product and/or an insert component along a second portion of the boundary. At least one of the first plastic film and the second plastic film comprises at least one recess in or adjacent to the second portion of the boundary. It is understood that the first portion of the boundary and the second portion of the boundary together define the entire circumferentially closed boundary. Moreover, it is understood that in a situation in which the first plastic film and the second plastic film are placed on top of each other during production of the bag component, the product space being defined by the mutually opposite sides of the first plastic film and the second plastic film and the circumferentially closed boundary may not yet have a volumetric extension. In such a case, the product space will expand into a third dimension, once it is filled with the product. The at least one recess provided in or adjacent to the second portion of the boundary has the effect that the first plastic film and the second plastic film have a reduced tendency to stick to one another. This is especially the case if the bag component according to the present invention is compared to a bag component not having a recess in or adjacent to the second portion of the boundary. This has the consequence that the first plastic film and the second plastic film may be easily forced apart by the product and/or the insert component and/or a tool such as a suction cup, when introducing the product and/or the insert component into the reception space. Thus, the insert component and/or the product may be inserted with enhanced precision and reliability. This enhances the manufacturing of such a bag component in general.

In the context of the present invention, a bag component is to be understood as a component of a bag. This means that a bag may be produced by performing at least one production step using the bag component. Alternatively, in some applications, the bag component may be directly used as a bag.

The bag component according to the invention may be suitable for a liquid or pulpy product.

In the present context, a recess is to be understood as a local depression provided in at least one of the first plastic film and the second plastic film. A reference plane of the recess or the depression is a plane of extension of the first plastic film or the second plastic film. The recess or depression may be circumferentially closed. This means that the recess or depression is limited by a respective lateral wall on each of its lateral sides. Alternatively, the recess or depression may be laterally open. This means that the recess or depression is provided adjacent to an edge of the first plastic film or the second plastic film, wherein the recess or depression is laterally open towards the edge. In other words, the recess or depression is not limited by a lateral wall on at least one of its lateral sides. In this context, it is also possible that during the course of the production of the bag component, the recess or depression is first circumferentially closed and becomes a laterally open recess or depression afterwards. This may happen, if the first plastic film or the second plastic film comprising the recess is subject to a cutting process, wherein a portion of the recess is cut off.

In an example, the at least one recess is provided on one of the first plastic film and the second plastic film and opens towards the respective other one of the first plastic film and the second plastic film. This means that a top opening of the recess is arranged proximal to the respective other one of the first plastic film and the second plastic film, wherein a bottom of the recess is arranged distal to the respective other one of the first plastic film and the second plastic film. In a case in which a recess is provided on each of the first plastic film and the second plastic film, this may apply to both the recess provided on the first plastic film and the recess provided on the second plastic film. In this case, the top openings of the recesses may face towards one another. Additionally or alternatively, the recesses on the first plastic film and on the second plastic film may be longitudinally or laterally shifted with respect to one another.

According to an alternative, the at least one recess is provided on one of the first plastic film and the second plastic film opens in a direction away from the respective other one of the first plastic film and the second plastic film. This means that a bottom of the recess is arranged proximal to the respective other one of the first plastic film and the second plastic film, wherein a top opening of the recess is arranged distal to the respective other one of the first plastic film and the second plastic film. In a case in which a recess is provided on each of the first plastic film and the second plastic film, this may apply to both the recess provided on the first plastic film and the recess provided on the second plastic film. In this case, the top openings of the recesses are facing away from one another.

The first plastic film and the second plastic film may be chosen such that the first plastic film and the second plastic film are suitable for the specific application for which the bag component is intended. For example, depending on the intended application, both the first plastic film and the second plastic film may be a multi-layer film. Alternatively, only one of the first plastic film and the second plastic film may be a multi-layer film. In the context of multi-layer films, it is possible that at least one multi-layer film comprises a metallic layer, e.g. an aluminum layer, which may serve as a barrier. It is also possible that one or both the first plastic film and the second plastic film are mono-layer films.

Moreover, the fact that the first plastic film and the second plastic film are placed on top of each other means that the first plastic film and the second plastic film have a planar overlap. The product space is arranged in the region of the planar overlap. In this context, an outer contour of the first plastic film and an outer contour of the second plastic film may be substantially congruent. This has the effect that a comparatively small amount of plastic film is needed in order to create the desired product space.

The at least one recess may be cup-shaped. This means that the recess comprises a single main cavity. This main cavity is always open at the top side of the recess. As has been explained before, the single main cavity may also be open on a lateral side. In this context, the circumference of the main cavity and/or a cross section of the main cavity may have any geometric shape. Such recesses may be produced in a cost-efficient and reliable manner.

In addition to the main cavity, a recess may also comprise one or more supplementary cavities and/or one or more supplementary protrusions. The fact whether a supplementary element is a supplementary cavity of a supplementary protrusion is determined relative to the main cavity. Thus, the recess may be formed by the main cavity and the one or more supplementary cavities and/or the one or more supplementary protrusions together. The one or more supplementary cavities may be provided laterally adjacent to the main cavity and/or inside the main cavity. The one or more supplementary protrusions may be provided inside the main cavity. Consequently, the shape of the recess may be adapted depending on the specific application of the bag component.

For example, the main cavity may have a circular or elliptical circumference and/or cross-section. This covers cases in which the main cavity is cylinder-shaped or cone-shaped including shapes of truncated cones.

It is also possible that the main cavity has a polygonal circumference and/or cross-section. In this example, the cavity may have a triangular or quadrangular circumference and/or cross-section. In the latter case, the cavity may have a quadratic or rectangular circumference and/or cross-section. Optionally, the corners of such a polygonal circumference and/or cross-section may be rounded.

Moreover, the at least one recess may be provided in any orientation with respect to the boundary. In an example, in which the recess has an elongated circumference and/or cross-section, a direction of elongation may be parallel to the boundary or may be oriented perpendicular to the boundary. According to a further example, the at least one recess is tilted with respect to the boundary. This means that the recess is neither oriented in parallel nor perpendicular to the boundary.

Alternatively, the at least one recess may be grid-shaped. This means that the recess comprises first recess elements extending in parallel along a first direction and second recess elements extending in parallel along a second direction, wherein the first direction and the second direction are non-parallel. Consequently, the first recess elements and the second recess elements cross each other. In simplified words, the recess has a net-shaped cross-section. Also such recesses may be produced in a cost-efficient and reliable manner. A grid-shaped recess is particularly suitable for covering a comparatively big area of the first plastic film or the second plastic film.

According to an example, the at least one of the first plastic film and the second plastic film comprises a plurality of recesses in or adjacent to the second portion of the boundary. This configuration allows the effect of reducing the tendency to stick to one another of the first plastic film and the second plastic film to be achieved over a comparatively large area. At the same time, each of the recesses can be kept small. Thus, also for comparatively large second portions of the boundary, the first plastic film and the second plastic film may be easily forced apart by the insert component and/or the product when introducing the insert component and/or the product into the reception space. The insert component and/or the product may be inserted with enhanced precision and reliability. This enhances the manufacturing of such a bag component in general.

In an example, the at least one of the first plastic film and the second plastic film comprises 2 to 60 recesses. Preferably, the at least one of the first plastic film and the second plastic film comprises 10 to 50 recesses. In an example, the at least one of the first plastic film and the second plastic film comprises 15 to 30 recesses. Consequently, the number of recesses can be adjusted as a function of the intended application of the bag component. By selecting a specific number of recesses, a good trade-off between the size of the recesses and the extension of the second portion of the boundary can be found. In any case, the effect of reducing the tendency to stick to one another of the first plastic film and the second plastic film is achieved.

The plurality of recesses may form a regular pattern or an irregular pattern. A regular pattern is structurally comparatively simple. This means that a tool for producing the regular pattern of recesses may be structurally comparatively simple. More generally speaking, a regular pattern of a plurality of recesses is comparatively simple to produce. In a case in which an irregular pattern is chosen, an intensity of the effect of reducing the tendency to stick to one another of the first plastic film and the second plastic film may be varied. For example, a high intensity of this effect may be ensured at a specific location of the second portion of the boundary, where the insert component and/or the product is inserted first when manufacturing the bag component. Thus, bag component production is facilitated.

According to an embodiment, all recesses of the plurality of recesses have the same geometry. A bag component having a plurality of recesses having the same geometry is comparatively simple both in design and manufacturing. In this context, a tool for manufacturing the recesses may have a comparatively simple structure such that the recesses may be manufactured in a simple and efficient manner.

According to another embodiment, at least two recesses out of the plurality of recesses have a different geometry. In such a case, an intensity of the effect of reducing the tendency to stick to one another of the first plastic film and the second plastic film may be varied. For example, a high intensity of this effect may be ensured at a specific location of the second portion of the boundary, where the insert component and/or the product is inserted first when manufacturing the bag component. Moreover, by choosing different geometries, differing side conditions over the extension of the second portion of the boundary may be respected.

In an example, adjacent recesses of the plurality of recesses are spaced from one another. In other words, a gap is provided between neighboring recesses. In the region of the gap, the first plastic film or the second plastic film on which the plurality of recesses are provided is non-deformed. This non-deformed region may be used as a contact region between the first plastic film or the second plastic film on which the plurality of recesses is provided and the insert component. Consequently, the insert component may be reliably connected to the first plastic film or the second plastic film on which the plurality of recesses is provided.

According to a variant, both the first plastic film and the second plastic film comprise at least one recess in or adjacent to the second portion of the boundary. In other words, each of the first plastic film and the second plastic film comprises at least one recess in or adjacent to the second portion of the boundary. Consequently, the effect of reducing the tendency to stick to one another of the first plastic film and the second plastic film is achieved in a particularly reliable manner.

In this context, the at least one recess provided on the first plastic film and the at least one recess provided on the second plastic film may open towards each other, away from each other or in the same direction. Consequently, an opening direction of the at least one recess provided on the first plastic film and an opening direction of the at least one recess provided on the second plastic film can be chosen as a function of the intended application of the bag component.

It is noted that all of the effects and features that have been explained above in connection with at least one recess being provided on at least one of the first plastic film and the second plastic film also apply, if both the first plastic film and the second plastic film comprise at least one recess in or adjacent to the second portion of the boundary. In other words, the above explanations apply to all the recesses.

An insert component may be arranged in the reception space. Due to the effect of reducing the tendency to stick to one another of the first plastic film and the second plastic film, the insert component may be inserted into the reception space in a precise and reliable manner. Consequently, a position and orientation of the insert component may be precisely chosen. Additionally, negative influences of the insert component on the first plastic film and the second plastic film are reduced to a minimum.

It is understood that a depth of the at least one recess may be reduced by arranging the insert component in the reception space. This means that the recess being formed in at least one of the first plastic film and the second plastic film may be at least partially flattened or compressed by arranging the insert component in the reception space. The flattening for example may occur if the insert component is welded to the first plastic film and/or the second plastic film.

In this context, the insert component may be a rigid part or a flexible part. It is also possible that the insert component is partly rigid and partly flexible.

Examples of insert components include an additional plastic film for increasing mechanical stability and a port component. Examples of port components include a tube, a base port and a port system, e.g. a single port system or a dual port system.

According to a second aspect of the invention, there is provided a method for manufacturing a bag component for a product. The method comprises
- forming a plastic film arrangement by placing a first plastic film and a second plastic film on top of each other or providing a plastic film arrangement comprising a first plastic film and a second plastic film being placed on top of each other,
- joining the first plastic film and the second plastic film along a first portion of a circumferentially closed boundary for a product space, and
- forming at least one recess in at least one of the first plastic film and the second plastic film, wherein the at least one recess is formed in or adjacent to a second portion of the boundary.

As before, it is understood that the first portion of the boundary and the second portion of the boundary together define the entire circumferentially closed boundary. It is additionally noted that the first plastic film and the second plastic film may be joined along the first portion of the circumferentially closed boundary before the at least one recess is formed or after the at least one recess has been formed. As has been mentioned before, forming the at least one recess in at least one of the first plastic film and the second plastic film has the effect of reducing the tendency to stick to one another of the first plastic film and the second plastic film. The fact that the at least one recess is formed while the first plastic film and the second plastic film are placed on top of each other has the additional effect that contamination of the mutually opposite sides of the first plastic film and the second plastic film delimiting the product space is avoided.

According to a variant, at least one recess is formed in each of the first plastic film and the second plastic film. In each of the first plastic film and the second plastic film, the respective at least one recess is formed in or adjacent to the second portion of the boundary.

In an example, forming the at least one recess comprises abutting a forming tool to an exterior side of the plastic film arrangement. In other words, the forming tool is not located in between the first plastic film and the second plastic film. This further enhances the effect of avoiding contamination of the mutually opposite sides of the first plastic film and the second plastic film delimiting the product space.

According to an example, the first plastic film and/or the second plastic film on which the at least one recess is formed, is softened before the at least one recess is actually formed. This applies at least to the region in which the at least one recess is formed. Softening the first plastic film and/or the second plastic film increases the deformability of the respective first plastic film and/or the second plastic film such that forming the at least one recess is facilitated. In an example, the first plastic film and/or the second plastic film is softened in that the first plastic film and/or the second plastic film is heated.

The at least one recess may be formed by thermoforming.

According to a further example, the first plastic film or the second plastic film on which the at least one recess is formed is fixated on the forming tool using vacuum. In this context, the forming tool needs to comprise a vacuum system with at least one vacuum duct and at least one suction opening being fluidically coupled to the at least one vacuum duct. The suction opening is located adjacent to the first plastic film or the second plastic film such that the first plastic film or the second plastic film can be held on the forming tool by applying vacuum. Fixating the first plastic film or the second plastic film has the effect that the recess may be formed with high precision.

The method may further comprise spacing the first plastic film and the second plastic film at least in or adjacent to the second portion of the boundary prior to forming the at least one recess. This means that when forming the at least one recess, the first plastic film and the second plastic film are arranged at a distance bigger than zero, at least in the region of the second portion of the boundary. Consequently, forming at least one recess in at least one of the first plastic film and the second plastic film does not affect the respective other one of the first plastic film and the second plastic film on which no recess is formed.

According to a third aspect of the invention, there is provided a forming tool for forming at least one recess in at least one plastic film of a plastic film arrangement. The plastic film arrangement comprises a first plastic film and a second plastic film being placed on top of each other. The forming tool comprises a forming surface being a negative of the recess to be formed. Moreover, the forming tool comprises a heating element being thermally coupled to the forming surface. Consequently, the forming tool combines means for heating and softening the plastic film on which the at least one recess is to be formed and means for actually forming the recess. Therefore, the forming tool is compact. Moreover, since the forming tool is configured for abutting against an exterior of the plastic film arrangement, contamination of mutually opposite sides of the first plastic film and the second plastic film delimiting the product space is avoided.

In an example, the heating element may be provided in the form of a heating cartridge.

The heating element may be an electric resistance heating element. In such a heating element, heat is generated by an electric current traveling through an electric resistance. The electric resistance heating elements may at least partially be formed as a printed electrical conductor pattern. Alternatively, the heating element is a fluid heating element. This means that the heating element comprises at least one channel through which a heating fluid may travel.

The forming surface being a negative of the recess to be formed can have a convex shape. In this case, the recess opens towards an exterior of the plastic film arrangement. In other words, a bottom of the recess which may be formed using such a forming tool is oriented towards the respective other one of the first plastic film and the second plastic film.

Alternatively, the forming surface being a negative of the recess to be formed can have a concave shape. In other words, the forming tool has at least one depression for forming the at least one recess. In this case, the portion of the first plastic film or the second plastic film on which the at least one recess is to be formed, needs to be pulled into the concave shape or depression of the forming tool. This may be done using vacuum.

In an example, the forming tool further comprises a vacuum system. The vacuum system has at least one vacuum duct and at least one suction opening being fluidically coupled to the at least one vacuum duct. The suction opening is located in the forming surface or an abutment surface configured for contacting the at least one plastic film. Consequently, the vacuum system is either used for fixating the first plastic film or the second plastic film on the abutment surface or for deforming the first plastic film or the second plastic film on which the at least one recess is to be formed. Of course, also combinations are possible. In this case, the vacuum system comprises at least two suction openings wherein one suction opening is located in the forming surface and the other suction opening is located in the abutment surface. Thus, vacuum is used for fixating the first plastic film or the second plastic film on which the at least one recess is to be formed on the forming tool and additionally for actually deforming the first plastic film or the second plastic film. Using such a forming tool, the at least one recess may be formed in a precise and reliable manner.

It is understood, that features, effects and advantages that have been mentioned in connection with one aspect of the present invention also apply all the other aspects of the present invention.

These and other aspects of the present invention will become apparent from and elucidated with reference to the examples described hereinafter. Examples of the invention will be described in the following with reference to the drawings.
- Figure 1: shows a bag component according to the invention which has been produced using a method according to the invention and a forming tool according to the invention,
- Figure 2: shows a detail II of the bag component of Figure 1,
- Figure 3: shows an alternative configuration of the detail II of the bag component of Figure 1,
- Figure 4: shows a detail IV of the bag component of Figure 1,
- Figure 5: shows a portion of the detail IV of the bag component of Figure 1 in a situation in which an insert component has not yet been inserted,
- Figure 6: shows an alternative configuration of the portion of the detail IV of the bag component of Figure 1 in a situation in which an insert component has not yet been inserted,
- Figure 7: shows a pattern of recesses having a circular cross section in a detailed view,
- Figure 8: shows a pattern of recesses having an elongated cross section in a detailed view,
- Figure 9: shows a recess having a main cavity and two supplementary cavities in a detailed view,
- Figure 10: shows a forming tool according to the invention while forming a recess during the execution of the method of the present invention,

- Figure 11: shows an alternative configuration of a forming tool according to the invention while forming a recess during the execution of the method of the present invention,
- Figure 12: shows an example of a forming tool according to the invention,
- Figure 13: shows another example of a forming tool according to the invention,
- Figure 14: shows a further example of a forming tool according to the invention,
- Figure 15: shows still another example of a forming tool according to the invention,
- Figure 16: shows a bag component according to another embodiment of the invention, wherein the bag component has been produced using a method according to the invention and a forming tool according to the invention, and
- Figure 17: shows a detail XVII of the bag component of Figure 16.

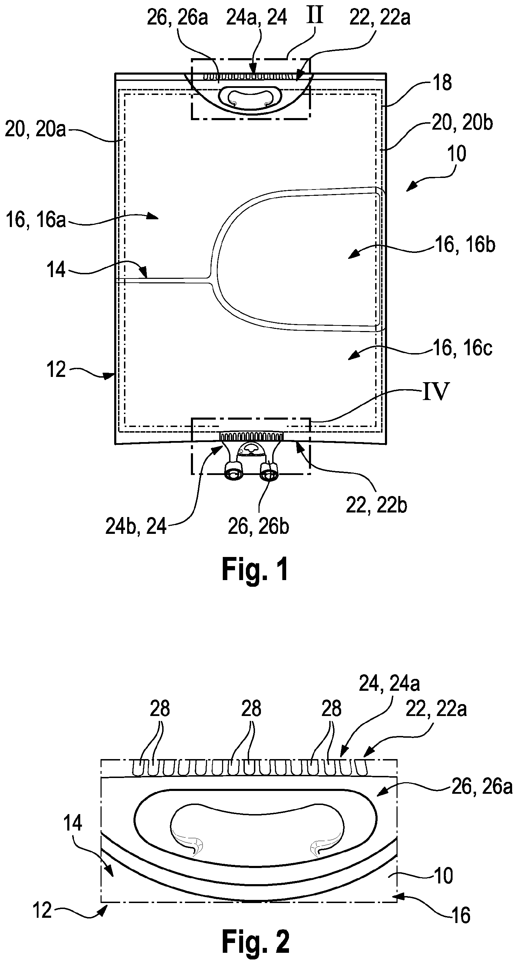

Figure 1 shows a bag component 10 which in the present example is used as a 3-chamber enteral nutrition bag. The bag component 10 may be used for a liquid or pulpy product.

The bag component 10 is represented empty.

The bag component 10 comprises a first plastic film 12 and a second plastic film 14 which are placed on top of each other. In the representation of Figure 1, the lower plastic film is considered to be the first plastic film 12 and the upper plastic film is considered to be the second plastic film 14.

A product space 16 of the bag component 10 is delimited by the mutually opposite sides of the first plastic film 12 and the second plastic film 14 and a circumferentially closed boundary 18. The boundary 18 is indicated by a dashed line in Figure 1. Since in the example of Figure 1, the bag component 10 is empty, the mutually opposite sides of the first plastic film 12 and the second plastic film 14 contact each other.

Due to the fact that the bag component 10 is a 3-chamber enteral nutrition bag, the product space 16 may be subdivided into a first product chamber 16a, a second product chamber 16b, and a third product chamber 16c.

The boundary 18 comprises two different portions. Along a first portion 20 of the boundary 18, the first plastic film 12 and the second plastic film 14 are joined to each other. In the present example, the first portion 20 comprises two portion segments 20a, 20b which are indicated by a dot and dash line.

Moreover, the boundary comprises a second portion 22. The second portion also comprises two portion segments 22a, 22b. Each of the portion segments 22a, 22b forms a reception space 24a, 24b for an insert component 26a, 26b.

More precisely, the portion segment 22a forms the reception space 24a and a first insert component 26a is arranged in the reception space 24a. In the present example, the first insert component 24a is a reinforcement component (see also Figure 2 for more details).

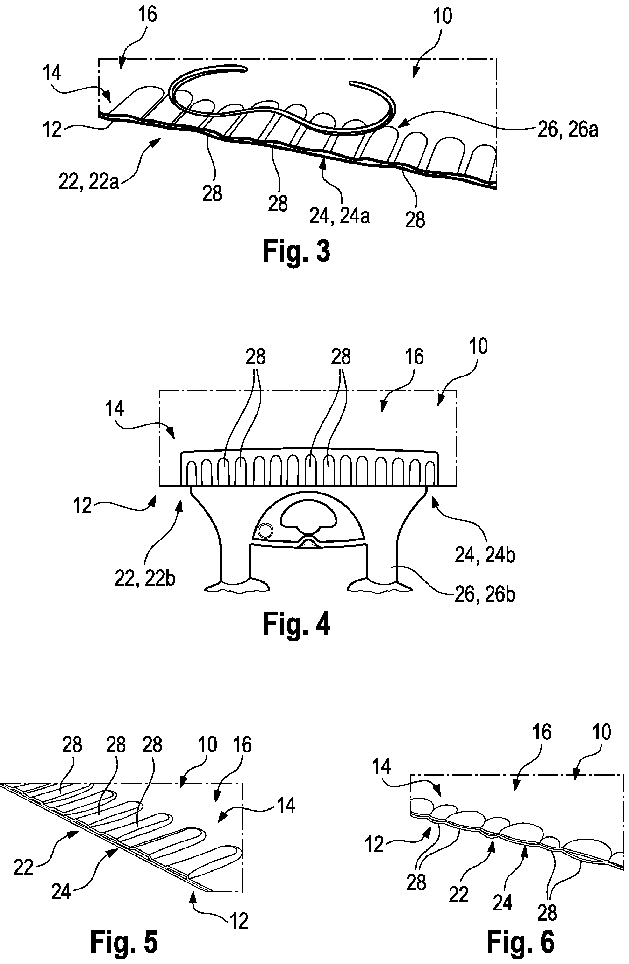

The portion segment 22b forms the reception space 24b and a second insert component 26b is arranged in the reception space 24b. In the present example, the second insert component 26b is a port component. More precisely, the second insert component 26b is a dual port (see also Figure 4 for more details).

In both the portion segment 22a and the portion segment 22b the second plastic film 14 comprises a plurality of recesses 28 (cf. Figures 2 and 4).

In each of the portion segments 22a, 22b, the recesses 28 are cup-shaped and essentially have the same geometry. The recesses 28 are spaced from one another, wherein a distance between neighboring recesses 28 is constant.

Consequently, the recesses 28 form a regular pattern.

It is understood that it is of course also possible to have the recesses 28 arranged in an irregular pattern, e.g. by providing different distances between adjacent recesses 28. Additionally or alternatively, the recesses 28 may have different orientations. Further additionally or alternatively, the recesses 28 may have different geometries.

Due to the recesses 28, a tendency of the first plastic film 12 and the second plastic film 14 to stick to one another is reduced. Consequently, during production of the bag component 10, the respective insert component 26a, 26b may be arranged easily and precisely in the corresponding reception space 24a, 24b.

Figure 3 shows an alternative to the detail of Figure 2 which essentially differs from the example of Figure 2 by the form of the handle.

Further examples of second portions 22 of the boundary 18 are illustrated in Figures 5 and 6.

In Figures 5 and 6, an insert component has not yet been inserted. These second portions 22 can be used as a segment 22a of the second portion 22 of the bag component 10 of Figure 1 or as a segment 22b of the second portion 22 of the bag component 10 of Figure 1.

In the example of Figure 6, recesses 28 of different geometries are used. More precisely, a recess 28 of a first type is comparatively narrow along a direction parallel to an edge of the first plastic film 12 and the second plastic film 14, wherein a recess 28 of a second type is comparatively wide along the direction parallel to the edge of the first plastic film 12 and the second plastic film 14. The narrower recesses and the wider recesses are arranged in alternance.

Moreover, in contrast to the above examples, the recesses 28 are directly adjacent to one another, i.e. not spaced from one another.

In the example of Figure 5, all recesses 28 have the same geometry. The recesses 28 are cup-shaped and have an elongated cross section, wherein a direction of elongation extends substantially perpendicular to an edge of the first plastic film 12 and the second plastic film 14. It is noted that in the examples of Figures 5 and 6 and also in the examples of Figure 1 to 4, the recesses 28 are laterally open. This is due to the fact that the first plastic film 12 and the second plastic film 14 are cut after the recesses 28 are formed.

It is noted that for reasons of better visibility, in Figures 1 to 6 only some of the recesses 28 are equipped with a reference sign.

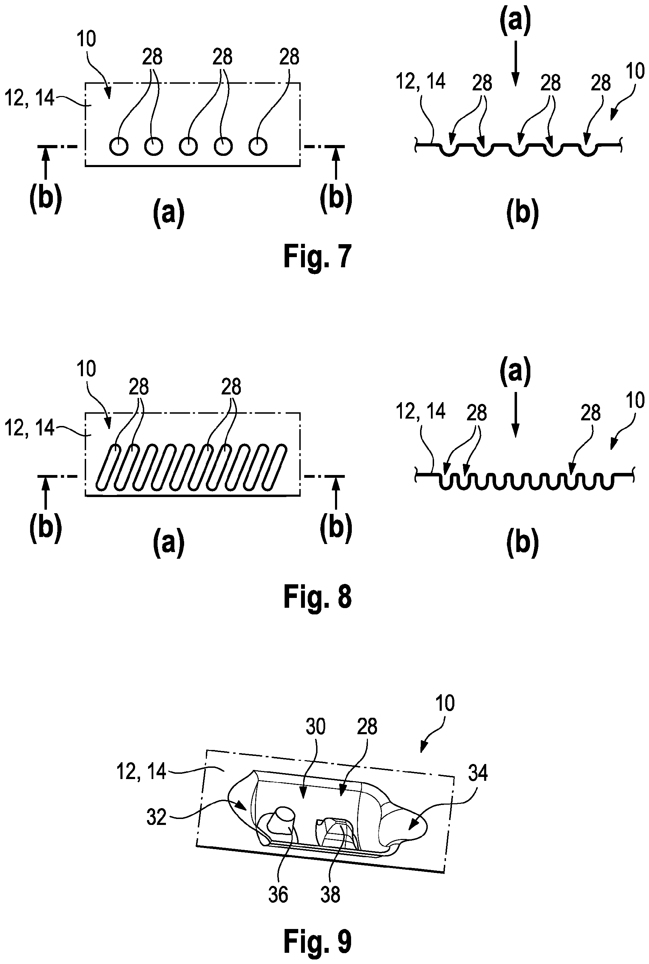

Figure 7 illustrates recesses 28 according to a further alternative.

In this context, Figure 7 (b) is a cross sectional view as indicated in Figure 7 (a) and Figure 7 (a) is a plan view as indicated in Figure 7 (b).

For better visibility, only one plastic film is represented in Figure 7. In accordance with the above explanations, this plastic film may be the first plastic film 12 for the second plastic film 14.

In the example of Figure 7, the recesses 28 have a circular cross-section and are cup-shaped.

Figure 8 illustrates recesses 28 according to another alternative.

As before, Figure 8 (b) is a cross sectional view as indicated in Figure 8 (a) and Figure 8 (a) is a plan view as indicated in Figure 8 (b).

For better visibility, only one plastic film is represented in Figure 8. In accordance with the above explanations, this plastic film may be the first plastic film 12 for the second plastic film 14.

In the example of Figure 8, the recesses 28 have an elongated cross-section. The cross-section may be described as having the form of a rectangle with rounded corners.

Moreover, in the example of Figure 8, a direction of elongation of the recesses 28 is tilted with respect to the edge. This means that the axis of elongation is neither parallel nor perpendicular to the edge.

Figure 9 shows a further example of a recess 28. In contrast to the above examples, the recess as shown in Figure 9 is comparatively complex.

The recess 28 of Figure 9 comprises a main cavity 30 and two supplementary cavities 32, 34.

The main cavity 30 has an elongated cross-section.

The two supplementary cavities 32, 34 are arranged on opposite sides of the main cavity 30. More precisely, the two supplementary cavities 32, 34 are arranged on the respective short sides of the main cavity 30. Both the two supplementary cavities 32, 34 may have a semi-circular cross-section.

Both the two supplementary cavities 32, 34 merge into the main cavity 30.

A depth of the main cavity 30 is bigger than a depth of the supplementary cavities 32, 34.

Moreover, on a bottom of the main cavity 30 two supplementary protrusion 36, 38 are arranged. The supplementary protrusion 36 is shaped as a truncated cone. The supplementary protrusion 38 is shaped as a truncated pyramid.

A height of the supplementary protrusion 36 and the supplementary protrusion 38 is smaller than a depth of the main cavity 30.

The recesses 28 as explained in connection with Figures 5 to 9 may be used as alternatives to the recesses 28 of the bag component 10 of Figure 1.

It is noted that even though in the above-mentioned examples, the recesses 28 always have been provided on only one of the first plastic film 12 and the second plastic film 14, it is of course also possible to have recesses 28 on both the first plastic film 12 and the second plastic film 14.

This means that the examples of recesses 28 that have been explained above can be used in any combination on both the first plastic film 12 and the second plastic film 14. In this context, the recesses 28 provided on the first plastic film 12 may be similar or different with respect to the recesses 28 provided on the second plastic film 14.

In the following, a method for manufacturing the bag component 10 for a liquid or pulpy product will be explained.

In a first step of the method, a plastic film arrangement is formed by placing the first plastic film 12 and the second plastic film 14 on top of each. Alternatively, such a plastic film arrangement comprising the first plastic film 12 and the second plastic film 14 being placed on top of each other may be provided.

Consequently, in both alternatives, the mutually opposite sides of the first plastic film 12 and the second plastic film 14 contact each other. Thereby, the mutually opposite sides of the first plastic film 12 and the second plastic film 14 are protected against contamination.

Subsequently, in a second step, the first plastic film 12 and the second plastic film 14 are joined along the first portion 20 of the circumferentially closed boundary 18. To this end, the first plastic film 12 and the second plastic film 14 may be joined by welding.

Depending on the type of the bag component 10, the second step may also comprise joining the first plastic film 12 and the second plastic film 14 in order to form different product chambers such as the first product chamber 16a, the second product chamber 16b and the third product chamber 16c.

Additionally, in a third step, the at least one recess 28 is formed in at least one of the first plastic film 12 and the second plastic film 14. As has been mentioned before, the at least one recess 28 is formed in or adjacent to the second portion 22 of the boundary 18.

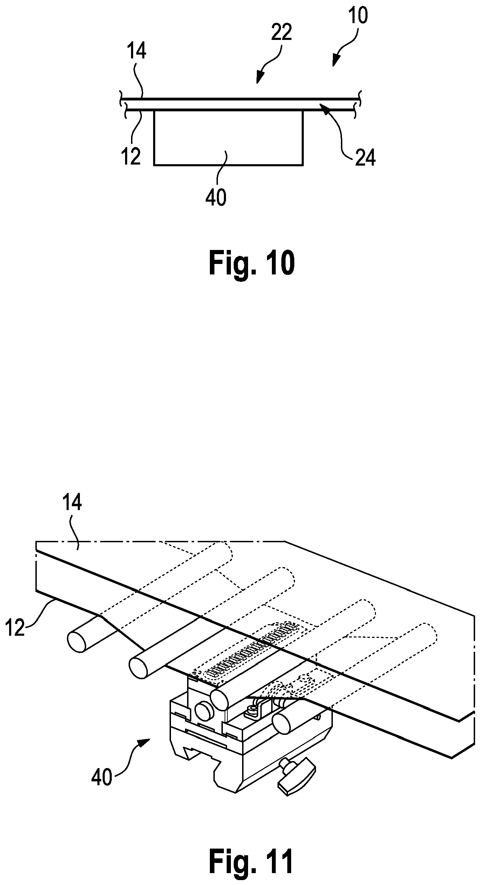

To this end, a forming tool 40 is used (cf. Figure 10).

The forming tool 40 is abutted again an exterior side of the plastic film arrangement. This means that the forming tool 40 does not contact the mutually opposite sides of the first plastic film 12 and the second plastic film 14 delimiting the product space 16.

In the example of Figure 10, the first plastic film 12 and the second plastic film 14 are contacting each other while the forming tool 40 is abutted against the exterior of the plastic film arrangement. In this variant, the mutually opposite sides of the first plastic film 12 and the second plastic film 14 forming the product space 16 are particularly well protected against contamination.

It is noted that in the example of Figure 10, the second step may be executed before the third step. This means that the first plastic film 12 and the second plastic film 14 may be joined before forming the at least one recess 28.

Alternatively, also in the example of Figure 10, the third step may be performed before the second step. This means that the at least one recess 28 may be formed before the first plastic film 12 and the second plastic film 14 are joined.

Figure 11 shows another example. In this example, the third step is always executed before the second step. This means that in this example the at least one recess 28 is always formed prior to joining the first plastic film 12 and the second plastic film 14.

A further difference of the example according to Figure 11 with respect to the example of Figure 10 consists in that the first plastic film 12 and the second plastic film 14 are spaced prior to forming the at least one recess 28. This applies at least to the region where the at least one recess 28 is formed, i.e. to the second portion 22 of the boundary 18.

This has the advantage that forming the at least one recess 28 does not influence the respective other one of the first plastic film 12 and the second plastic film 14.

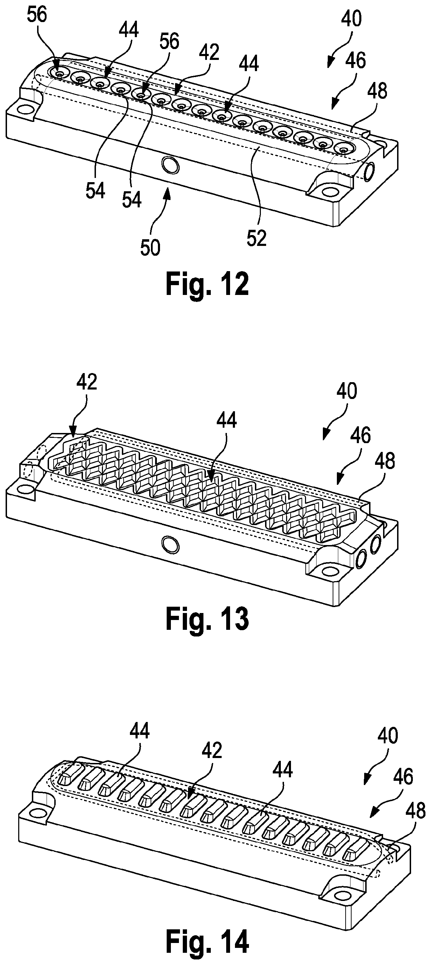

Figures 12 to 15 show different examples of forming tools 40.

In each of the examples, the forming tool 40 comprises an abutment surface 42 which is configured for contacting the at least one plastic film on which the at least one recess 28 is to be formed. This means that the abutment surface 42 is configured to contact the first plastic film 12 or the second plastic film 14.

Moreover, each of the forming tools 40 comprises a forming surface 44. Depending on the number of recesses 28 to be formed, the forming surface 44 may comprise a plurality of forming surface segments, one per recess 28.

In each of the examples, the forming surface 44 is a negative of the recess 28 to be formed.

Furthermore, in each of the examples, the forming tool 40 comprises a heating element 46.

In all examples, the heating element 46 comprises an electric conductor 48 having an electric resistance.

Consequently, the electric conductor 48 may heat the remaining portions of the forming tool 40 if an electric current is applied to the electric conductors 48.

In Figures 12 to 15, the electric conductor 48 is represented schematically.

The heating element is configured to soften the first plastic film 12 or the second plastic film 14 in order to increase the deformability of the respective first plastic film 12 or second plastic film 14.

To this end, the heating element 46 is thermally coupled to the forming surface 44.

This may be achieved in that the forming tool 40 is made from a thermally conductive material, e.g. metal.

In the example of Figure 12, the forming tool 40 comprises a plurality of depressions having a substantially circular cross-section.

In this example, the forming surface 44 is formed by the surfaces of these depressions. This means that each of the depression forms a segment of the forming surface 44.

Moreover, the forming tool 40 of Figure 12 comprises a vacuum system 50.

The vacuum system 50 comprises a central vacuum duct 52 extending substantially along a length of the forming tool 40.

Moreover, each of the depressions is communicatively connected to the central vacuum duct 52 via a corresponding side duct 54. Each side duct 54 ends in an suction opening 56 which is arranged at the bottom of each of the depressions.

More generally speaking, the suction openings 56 are arranged in the forming surface 44.

It is noted that in Figure 12 only some of the suction openings 56 and some of the side ducts 54 are equipped with a reference sign.

A vacuum or an under pressure can be applied to the central vacuum duct 52 using a vacuum generator such as a vacuum pump (not shown).

The vacuum system 50 serves two purposes.

First, the vacuum system 50 is used to fixate the first plastic film 12 or the second plastic film 14 on which the recess 28 is to be formed on the forming tool 40.

Second, the vacuum system 50 is configured to actually form the recesses 28.

To this end, by applying the vacuum or under pressure to the central vacuum duct 52 and the side ducts 54, portions of the first plastic film 12 or the second plastic film 14 covering the depressions of the forming tool 40 are pulled inside the respective depressions thereby creating the recesses 28.

It is understood that the portion of the first plastic film 12 or the second plastic film 14 which abuts against the forming tool 40 is heated prior to deforming the first plastic film 12 or the second plastic film 14.

In this context, two levels of under pressure may be applied. A first level of under pressure may be applied to fixate the first plastic film 12 or the second plastic film 14 on the forming tool 40. This level of under pressure may be maintained while heating the first plastic film 12 or the second plastic film 14.

Thereafter, a second under pressure may be applied in order to deform the first plastic film 12 or the second plastic film 14.

In this context, a difference between an ambient pressure and the second level of under pressure may be bigger than a difference between the ambient pressure and the first level of under pressure.

In the example of Figure 13, the forming tool 40 comprises a forming surface 44 which comprises grid-shaped depression being formed of a first set of linear notches extending in parallel and a second set of linear notches extending also in parallel. The first set of linear notches and the second set of linear notches cross each other.

Using the forming tool 40 of Figure 13, a grid-shaped recess 28 may be formed in the first plastic film 12 or the second plastic film 14.

Also the forming tool 40 of Figure 13 comprises a vacuum system with suction openings being arranged in the forming surface 44. In Figure 13 the vacuum system is not represented. Reference is made to the above explanations.

Another example of the forming tool 40 is shown in Figure 14.

In contrast to the examples of Figure 12 and 13, now the forming surface 44 is formed of a plurality of protrusions. Each of the protrusion forms a segment of the forming surface 44.

Moreover, the protrusions have an elongated form.

The protrusions substantially extend in parallel and are spaced equidistantly.

A further difference between the forming tool 40 of Figure 14 and the forming tools 40 of Figures 12 and 13 is that the forming tool 40 of Figure 14 does not comprise a vacuum system.

Thus, when using the forming tool 40 of Figure 14, the forming surface 44 is heated and then pushed against the first plastic film 12 or the second plastic film 14.

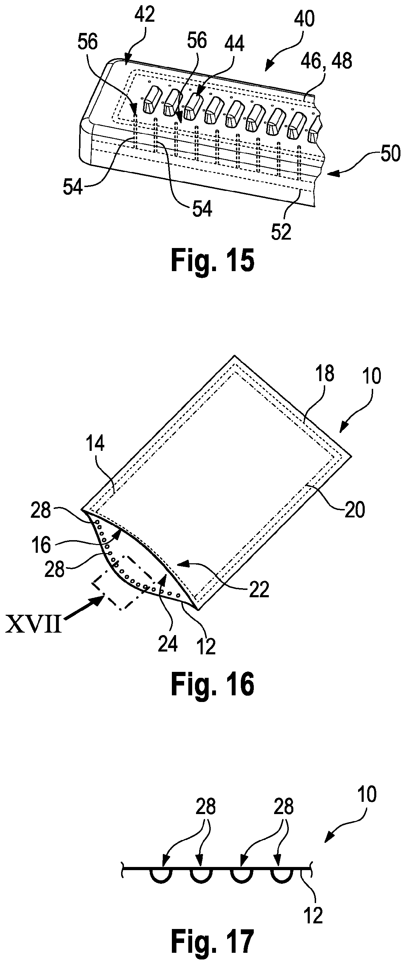

A further example of a forming tool 40 is shown in Figure 15.

As far as the forming surface 44 is concerned, the forming tool 40 of Figure 15 corresponds to the forming tool 40 of Figure 14.

However, in contrast to the forming tool of Figure 14, the forming tool of Figure 15 comprises a vacuum system 50.

As before, the vacuum system 50 comprises a central vacuum duct 52 and a plurality of side ducts 54 ending in a respective suction opening 56.

In the example of Figure 15 the suction openings 56 are located in the abutment surface 42.

As before, also in the example of Figure 15, the vacuum system 50 is used for fixating the first plastic film 12 or the second plastic film 14 on the forming tool 40 and deforming the first plastic film 12 or the second plastic film 14. In the context of the latter, the first plastic film 12 or the second plastic film 14 is pulled over the warm protrusions of the forming tool 40.

Figures 16 and 17 show a bag component 10 according to another embodiment. The bag component 10 of Figures 16 and 17 is used as a so-called overwrapping bag. The overwrapping bag may for example be used as a packaging for another bag such as an infusion bag, an irrigation bag, an enteral nutrition bag or a parenteral nutrition bag.

In the context of the example of Figures 16 and 17, the infusion bag, the irrigation bag, the enteral nutrition bag or the parenteral nutrition bag would be the product, even though it is of course possible that the infusion bag, the irrigation bag, the enteral nutrition bag or the parenteral nutrition bag uses a bag component 10 as for example shown in the examples of Figures 1 to 9.

The bag component 10 of Figures 16 and 17 is represented empty, wherein the first plastic film 12 and the second plastic film 14 are represented spaced apart from one another in the second portion 22 of the boundary 18 forming the reception space 24.

In the example of Figure 16 and 17, due to the fact that the bag component 10 is used as an overwrapping bag, the reception space 24 is configured to have the product transferred there through when placing the product in the product space 16.

In the example of Figures 16 and 17, a plurality of recesses 28 are provided on the first plastic film 12. For better visibility, only some of the recesses 28 carry a reference sign in Figure 16.

As before, the recesses 28 are cup-shaped and essentially have the same geometry. The recesses 28 are spaced from one another, wherein a distance between neighboring recesses 28 is constant.

Consequently, the recesses 28 form a regular pattern.

Due to the recesses 28, a tendency of the first plastic film 12 and the second plastic film 14 to stick to one another is reduced. Consequently, during production of the bag component 10, the respective product may be arranged easily and precisely in the corresponding reception space 24 and/or transferred there through in order to be arranged in the product space 16.

It is understood that the bag component 10 of Figures 16 and 17 may be combined with any one of the examples as explained above and/or modified in accordance with these examples.

Moreover, the method for manufacturing a bag component 10 as explained above and the forming tool 40 as explained above may also be used in order to manufacture the bag component 10 of Figures 16 and 17.

### List of reference signs

- 10: bag component
- 12: first plastic film
- 14: second plastic film
- 16: product space
- 16a: first product chamber
- 16b: second product chamber
- 16c: third product chamber
- 18: boundary
- 20: first portion of the boundary
- 20a: segment of the first portion
- 20b: segment of the first portion
- 22: second portion of the boundary
- 22a: segment of the second portion
- 22b: segment of the second portion
- 24: reception space
- 24a: reception space
- 24b: reception space
- 26: insert component
- 26a: first insert component
- 26b: second insert component
- 28: recess
- 30: main cavity
- 32: supplementary cavity
- 34: supplementary cavity
- 36: supplementary protrusion
- 38: supplementary protrusion
- 40: forming tool
- 42: abutment surface
- 44: forming surface
- 46: heating element
- 48: electric conductor
- 50: vacuum system
- 52: central vacuum duct
- 54: side duct
- 56: suction opening

## Claims

1. A bag component (10) for a product, comprising a first plastic film (12) and a second plastic film (14), the first plastic film (12) and the second plastic film (14) being placed on top of each other,
wherein a product space (16, 16a, 16b, 16c) is delimited by the mutually opposite sides of the first plastic film (12) and the second plastic film (14) and a circumferentially closed boundary (18),
wherein the first plastic film (12) and the second plastic film (14) are joint to each other along a first portion (20, 20a, 20b) of the boundary (18), and wherein the first plastic film (12) and the second plastic (14) film form a reception space (24, 24a, 24b) for the product and/or an insert component (26, 26a, 26b) along a second portion (22, 22a, 22b) of the boundary (18), and
wherein at least one of the first plastic film (12) and the second plastic film (14) comprises at least one recess (28) in or adjacent to the second portion (22, 22a, 22b) of the boundary (18).

2. The bag component (10) of claim 1, wherein the at least one recess (28) is cup-shaped.

3. The bag component (10) of claim 1, wherein the at least one recess (28) is grid-shaped.

4. The bag component (10) of any one of the preceding claims, wherein the at least one of the first plastic film (12) and the second plastic film (14) comprises a plurality of recesses (28) in or adjacent to the second portion (22, 22a, 22b) of the boundary (18).

5. The bag component (10) of claim 4, wherein the plurality of recesses (28) form a regular pattern or an irregular pattern.

6. The bag component (10) of claim 4 or 5, wherein all recesses (28) of the plurality of recesses have the same geometry.

7. The bag component (10) of claim 4 or 5, wherein at least two recesses (28) out of the plurality of recesses (28) have a different geometry.

8. The bag component (10) of any one of claims 4 to 7, wherein adjacent recesses (28) of the plurality of recesses (28) are spaced from one another.

9. The bag component (10) of any one of the preceding claims, wherein both the first plastic film (12) and the second plastic film (14) comprise at least one recess (28) in or adjacent to the second portion (22, 22a, 22b) of the boundary (18).

10. The bag component (10) of any one of the preceding claims, wherein an insert component (26, 26a, 26b) is arranged in the reception space (24, 24a, 24b).

11. A method for manufacturing a bag component (10) for a product, comprising
- forming a plastic film arrangement by placing a first plastic film (12) and a second plastic film (14) on top of each other or providing a plastic film arrangement comprising a first plastic film (12) and a second plastic film (14) being placed on top of each other,
- joining the first plastic film (12) and the second plastic film (14) along a first portion (20, 20a, 20b) of a circumferentially closed boundary (18) for a product space (16, 16a, 16b, 16c), and
- forming at least one recess (28) in at least one of the first plastic film (12) and the second plastic film (14), wherein the at least one recess (28) is formed in or adjacent to a second portion (22, 22a, 22b) of the boundary (18).

12. The method of claim 11, wherein forming the at least one recess (28) comprises abutting a forming tool (40) to an exterior side of the plastic film arrangement.

13. The method of claim 11 or 12, further comprising spacing the first plastic film (12) and the second plastic film (14) at least in or adjacent to the second portion (22, 22a, 22b) of the boundary (18) prior to forming the at least one recess (28).

14. A forming tool (40) for forming at least one recess (28) in at least one plastic film (12, 14) of a plastic film arrangement comprising a first plastic film (12) and a second plastic film (14) being placed on top of each other, the forming tool (40) comprising a forming surface (44) being a negative of the recess (28) to be formed and a heating element (46) being thermally coupled to the forming surface (44).

15. The forming tool (40) of claim 14, further comprising a vacuum system (50) having at least one vacuum duct (52, 54) and at least one suction opening (56) being fluidically coupled to the at least one vacuum duct (52, 54), wherein the suction opening (56) is located in the forming surface (44) or in an abutment surface (42) configured for contacting the at least one plastic film (12, 14).
